# DEMANDE DE BREVET EUROPEEN

(11) **EP 0 919 710 A1**
(43) Date de publication de la demande: **02.06.1999**
(21) Numéro de dépôt: 98402966.0
(22) Date de dépôt: 27.11.1998
(51) Int. Cl.: F02D 41/02, F01N 3/20, F02D 41/14

(54) **Procédé de commande d'un moteur à injection directe et allumage commandé**

(30) Priorité: 28.11.1997 FR 9714985
(71) Demandeur: RENAULT, 92109 Boulogne-Billancourt (FR)
(72) Inventeur: Hauet, Bertrand, 78640 Saint Garmain de la Grange (FR); Monnier, Gaetan, 78955 Carrieres sous Poissy (FR)
(74) Mandataire: Fernandez, Francis

(57) **Abrégé**

Procédé de commande d'un moteur à combustion interne à allumage commandé et à injection directe de carburant coopérant avec des moyens de purification par conversion catalytique des gaz d'échappement, du type par lequel les moyens d'allumage et d'injection du carburant sont commandés respectivement à travers le phasage de l'instant d'allumage et le phasage du début d'injection ainsi que la durée d'injection du carburant, caractérisé en ce que pendant une période adaptée suivant le lancement du moteur, les moyens d'injection du carburant sont commandés pour provoquer la stratification de la charge et obtenir une richesse globale comprise entre 0,75 et 1.

## Description

La présente invention a pour objet un procédé de commande d'un moteur à combustion interne et allumage commandé. La présente invention concerne plus particulièrement un procédé de commande adapté à l'amorçage rapide des moyens de traitement des gaz d'échappement par conversion catalytique.

D'une façon générale les normes concernant la pollution des moteurs à combustion interne équipant les véhicules automobiles se sévérisent chaque jour davantage dans l'ensemble des pays industrialisés. L'industrie automobile est donc aujourd'hui tout entière mobilisée à trouver des solutions techniques pour répondre à ces contraintes et ce sans trop pénaliser ni les performances des moteurs ni leur prix de revient.

Pour lutter contre l'émission des gaz polluants, l'industrie automobile a adopté l'utilisation de dispositifs d'échappement traitant par conversion catalytique les composants nocifs des gaz d'échappement. Ces dispositifs encore appelés pots catalytiques permettent en effet l'oxydation des hydrocarbures imbrûlés HC et du monoxyde de carbone CO ainsi que la réduction des oxydes d'azote NOx. Ces réactions sont en effet toutes fortement accélérées par la présence de catalyseurs de sorte qu'elles peuvent s'accomplir pendant le bref temps de passage des gaz d'échappement à travers le pot.

Toutefois, la conversion catalytique des polluants ne s'amorce que lorsque les catalyseurs ont atteint une certaine température, en générale supérieure à 300°C. Il en résulte que, lors des démarrages des moteurs, la température des gaz d'échappement n'est pas suffisante pour amorcer les réactions chimiques, il s'ensuit donc une phase plus ou moins longue pendant laquelle les polluants émis par le moteur ne sont pas ou insuffisamment traités. On peut ainsi estimer que, sur un cycle normalisé avec démarrage à froid, 80 à 90% des particules sont émises pendant les deux premières minutes de fonctionnement du moteur.

Différentes solutions ont alors été proposées pour réduire ce temps d'amorçage. On peut citer les systèmes d'injection d'air à l'échappement pour provoquer la postcombustion des gaz d'échappement et accélérer la montée en température du pot catalytique. On peut également citer les moyens de chauffage ou préchauffage électriques ou électromagnétiques des pots catalytiques tels que décrits dans les demandes de brevet WO-A-90/14507, WO-A-92/02714 ou encore EP-A-465.184. Le document WO-A-90/02250 prévoit quant à lui l'utilisation d'un catalyseur dit de démarrage chauffé utilisé uniquement tant que les gaz d'échappement n'ont pas atteint une température suffisante, des moyens déflecteurs de courant dirigeant les gaz d'échappement en fonction de leur température vers le catalyseur de démarrage ou dans une voix de contournement. Ces différentes solutions ont pour inconvénients d'impliquer des modes de réalisation onéreux et de nécessiter pour fonctionner un apport d'énergie plus ou moins important.

Pour remédier à ces différents inconvénients, les constructeurs de moteur alors ont cherché à provoquer cette montée accélérée en température du pot catalytique en agissant directement sur la commande des moteurs. En particulier, pour les moteurs à combustion interne et allumage commandé, une solution consiste à appliquer une sous avance à l'allumage de manière à décaler la combustion vers la phase échappement, ce qui contribue à augmenter fortement la température des gaz d'échappement à la sortie des chambres de combustion.

Malheureusement, les solutions connues à ce jour agissant par la commande des moteurs à combustion interne et allumage commandé, ont pour inconvénients de dégrader les conditions de fonctionnement de ces moteurs et notamment d'augmenter leur consommation en carburant.

Le but de la présente invention est donc de mettre en oeuvre un procédé de commande d'un moteur à combustion interne à injection directe et à allumage commandé qui permet une montée en température rapide du pot catalytique sans présenter les inconvénients des solutions antérieures rappelées ci-dessus.

Le procédé de commande selon l'invention d'un moteur à combustion interne à allumage commandé et à injection directe de carburant coopérant avec des moyens de purification par conversion catalytique des gaz d'échappement, est du type par lequel les moyens d'allumage et d'injection du carburant sont commandés respectivement à travers le phasage de l'instant d'allumage et le phasage du début d'injection ainsi que la durée d'injection du carburant,

Selon l'invention, le procédé de commande d'un moteur à combustion interne est caractérisé en ce que pendant une période adaptée suivant le lancement du moteur, les moyens d'injection du carburant sont commandés pour provoquer la stratification de la charge et obtenir une richesse globale comprise entre 0,75 et 1.

Selon une autre caractéristique du procédé de commande d'un moteur à combustion interne objet de l'invention, la stratification de la charge est obtenue en injectant le carburant dans chacune des chambres de combustion moins de 100° vilebrequin avant le Point Mort Haut combustion.

Selon une autre caractéristique du procédé de commande d'un moteur à combustion interne objet de l'invention, la stratification de la charge est obtenue en injectant le carburant dans chacune des chambres de combustion entre 40° et 100° vilebrequin avant le Point Mort Haut combustion.

Selon une autre caractéristique du procédé de commande d'un moteur à combustion interne objet de l'invention, pendant la période adaptée suivant le lancement du moteur où les moyens d'injection du carburant sont commandés pour provoquer la stratification de la charge, les moyens d'allumage sont alors commandés en conséquence pour maintenir le rendement du moteur.

Selon une autre caractéristique du procédé de commande d'un moteur à combustion interne objet de l'invention, pendant la période adaptée suivant le lancement du moteur où les moyens d'injection du carburant sont commandés pour provoquer la stratification de la charge, l'avance à l'allumage est alors comprise entre 40° vilebrequin avant le Point Mort Haut combustion et 10° vilebrequin avant le Point Mort Haut combustion.

Selon une autre caractéristique du procédé de commande d'un moteur à combustion interne objet de l'invention, cette période adaptée correspond à une période de temporisation constante.

Selon une autre caractéristique du procédé de commande d'un moteur à combustion interne objet de l'invention, cette période adaptée est de durée variable, la fin de la période étant déterminée par le dépassement de seuils par les valeurs de paramètres de fonctionnement moteur transmises par un ou plusieurs capteurs, paramètres de fonctionnement moteur dont l'évolution est en corrélation avec l'amorçage du pot catalytique.

On comprendra mieux les buts, aspects et avantages de la présente invention, d'après la description donnée ci-après d'un mode de réalisation de l'invention, donné à titre d'exemple non limitatif, en se référant au dessin annexé, dans lequel :

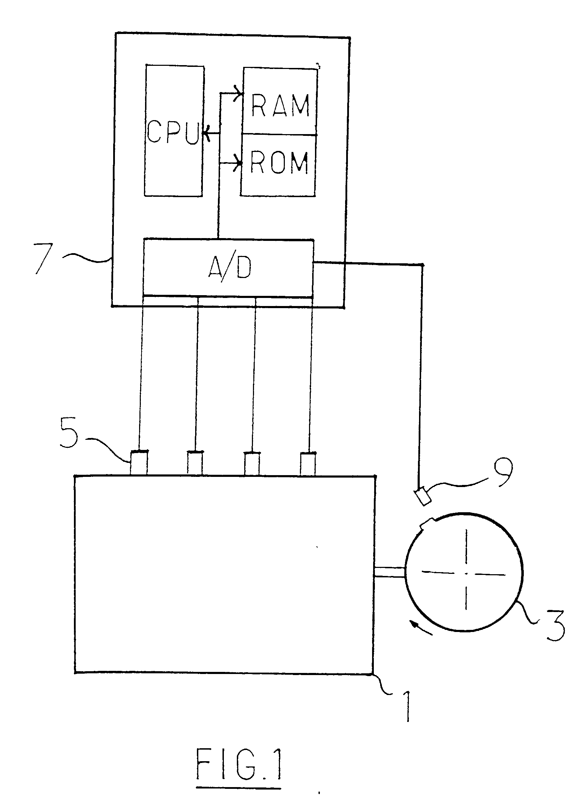

la figure 1 est une vue schématique d'un moteur à combustion interne à injection directe et allumage commandé, équipé d'un système de contrôle moteur pour la mise en oeuvre du procédé selon l'invention.

Conformément à la figure 1, le moteur référencé 1, du type à combustion interne à quatre temps, à allumage commandé et à injection directe de carburant est classiquement équipé d'un système électronique de contrôle moteur 7 pilotant l'injection du carburant et l'allumage des bougies non figurées. Ce moteur est, par ailleurs, classiquement équipé d'une ligne d'échappement non figurée coopérant avec des moyens de traitement des gaz d'échappement par conversion catalytique également non figurés.

Ce système électronique de contrôle 7 qui a pour objet la mise en oeuvre du procédé de commande conformément à la présente invention, comprend classiquement un calculateur comportant une CPU, une mémoire vive (RAM), une mémoire morte (ROM), des convertisseurs A/N (analogique-numérique), et différentes interfaces d'entrées et de sorties.

Ce système de contrôle moteur 7 reçoit un certain nombre de signaux d'entrée fournissant la valeur des principaux paramètres caractérisant le fonctionnement du moteur : régime, charge, pression collecteur, température d'eau, position pédale d'accélérateur ou encore la tension batterie, et une information sur la position des pistons dans les cylindres issue notamment d'un capteur de position 9 coopérant avec une cible dentée 3 solidaire du volant moteur porté par le vilebrequin.

Le système électronique de contrôle moteur 7 procède alors, à partir de ces différentes informations et selon des stratégies ou procédés d'actionnement prédéterminés mis en place dans la CPU, à la commande du débit des électro-injecteurs 5 en contrôlant pour chacun d'eux la phase de début d'injection ou la phase de fin d'injection et la durée d'ouverture, déterminant ainsi un débit précis de carburant pour chaque injecteur 5 qui est alimentée en carburant sous une pression sensiblement constante. Le système électronique de contrôle moteur 7, pilote de la même façon, selon des stratégies ou procédés d'actionnement prédéterminés mis en place dans la CPU, l'instant d'allumage.

Le procédé de commande selon l'invention, concerne donc le pilotage des injecteurs et des bougies pendant la phase dite d'amorçage catalyseur.

Sitôt donc le lancement du moteur et pendant une période adaptée nécessaire à l'amorçage du pot catalytique, le moteur est alors commandé de façon à fonctionner en charge stratifiée et à richesse élevée.

Cette période adaptée pendant laquelle on commande le moteur selon une stratégie adaptée, peut être choisie, sans que cela soit limitatif de l'invention, de durée fixe, c'est-à-dire une simple temporisation de durée constante (correspondant à la durée minimale constatée par des essais préalables pour que le catalyseur atteigne sa température de fonctionnement optimale), ou bien encore de durée variable.

En cas de durée variable, le début comme la fin de la période peuvent être déterminés par le dépassement de seuils par les valeurs transmises par un ou plusieurs capteurs de mesure des paramètres de fonctionnement moteur dont l'évolution est en corrélation plus ou moins directe avec l'amorçage du pot catalytique (température d'eau, température d'entrée ou de sortie catalyseur, voire une combinaison de toute ou partie de ces informations).

A titre d'exemple non limitatif, on peut ainsi appliquer la stratégie objet de l'invention lors du lancement du moteur si et seulement si la température d'eau est inférieure à 40°c et arrêter ensuite la mise en oeuvre de la stratégie sitôt que la température d'eau excède 60°c. Selon cet exemple, la stratégie est plus particulièrement limitée aux démarrages à froid du moteur et n'est donc pas mise en oeuvre lors des démarrages à chaud, et lorsque la stratégie est mise en oeuvre elle ne se prolonge que le temps d'obtenir le gradient de température d'eau souhaité.

Le fonctionnement stratifié est obtenu en injectant le carburant tardivement dans le cycle moteur afin de générer une zone très riche localement en carburant. Le phasage de l'injection est bien évidemment optimisé pour chaque type de moteur par des essais préalables au banc moteur puis cartographie dans le système de contrôle moteur 7. Néanmoins et de façon générale, on peut considérer que l'injection de carburant dans cette phase d'amorçage du catalyseur doit survenir de préférence entre 40° et 100° vilebrequin avant le Point Mort Haut combustion.

Le dosage du carburant et donc le temps d'injection est adapté pour produire une richesse globale comprise entre 0,75 et 1. Le contrôle du rapport air carburant est assuré pendant cette phase d'amorçage catalyseur soit en boucle ouverte à partir de cartographies adaptées soit en boucle fermée à partir de cartographies adaptées et à partir de la mesure de richesse faite par exemple au moyen d'une sonde à oxygène de type linéaire (UEGO), implantée dans la ligne d'échappement.

Pour accompagner ce fonctionnement en charge stratifiée à richesse élevée proche de la stoechiométrie, l'avance à l'allumage des bougies est modifiée en conséquence pour produire une combustion stable et optimiser le rendement du moteur.

Le rendement du moteur (c'est-à-dire la qualité de la transformation de l'énergie introduite lors de la combustion en énergie mécanique sur le piston) est sensiblement à son optimum lorsque la moitié de la charge introduite dans le moteur est transformée en énergie (et donc brûlée) aux alentours de 6 à 8° vilebrequin après le Point Mort Haut combustion pour un moteur à charge stratifiée.

Des essais préalables au banc moteur, avec analyse de la combustion, permettent de déterminer le meilleur phasage de l'allumage de la charge dans le cycle, suivant les différents points de fonctionnement du moteur, afin de se rapprocher de ce critère. Ces phasages sont ensuite cartographies dans le système de contrôle moteur. Néanmoins et de façon générale, on peut considérer que l'instant d'allumage doit se situer de préférence entre 40° vilebrequin avant le Point Mort Haut combustion et 10° vilebrequin avant le Point Mort Haut combustion.

Ainsi, grâce à la stratégie d'amorçage catalyseur selon l'invention, c'est-à-dire grâce au mode de fonctionnement en charge stratifiée à richesse élevée, on provoque des combustions localement très riches bien que globalement le mélange présent dans le cylindre soit en léger excès d'air. Or, ce type de combustion bien que réglée est apparu à la Demanderesse comme provoquant l'apparition de produits intermédiaires de combustion (essentiellement des hydrocarbures HC, du monoxyde de carbone CO et de l'hydrogène H2), produits intermédiaires qui se post-oxydent ensuite jusque dans les tubulures d'échappement, à travers des réactions fortement exothermiques, grâce à l'oxygène présent en excès.

Ces post-oxydations accroissent de façon remarquable la température des gaz d'échappement au plus près du catalyseur et provoquent ainsi une montée en température extrêmement rapide du catalyseur.

Ainsi, avec des combustions stables et sans dégradation de rendement grâce au calage approprié de l'avance à l'allumage, on réalise un amorçage extrêmement rapide du catalyseur. La stratégie selon l'invention présente par ailleurs l'avantage supplémentaire d'éliminer avant même la mise en action du catalyseur, la plupart des hydrocarbures et du monoxyde de carbone émis par le moteur.

Une telle solution est de plus facile à mise en oeuvre, sans surcoût autre que celui du développement du logiciel et des calibrations correspondantes.

Bien entendu, l'invention n'est nullement limitée au mode de réalisation décrit et illustré qui n'a été donné qu'à titre d'exemple non limitatif.

Au contraire, l'invention comprend tous les équivalents techniques des moyens décrits ainsi que leurs combinaisons si celles-ci sont effectuées suivant son esprit.

## Revendications

1. Procédé de commande d'un moteur à combustion interne à allumage commandé et à injection directe de carburant coopérant avec des moyens de purification par conversion catalytique des gaz d'échappement, du type par lequel les moyens d'allumage et d'injection du carburant sont commandés respectivement à travers le phasage de l'instant d'allumage et le phasage du début d'injection ainsi que la durée d'injection du carburant, caractérisé en ce que pendant une période adaptée suivant le lancement du moteur, les moyens d'injection du carburant sont commandés pour provoquer la stratification de la charge et obtenir une richesse globale comprise entre 0,75 et 1.

2. Procédé de commande d'un moteur à combustion interne selon la revendication 1, caractérisé en ce que ladite stratification de la charge est obtenue en injectant le carburant dans chacune des chambres de combustion moins de 100° vilebrequin avant le Point Mort Haut combustion.

3. Procédé de commande d'un moteur à combustion interne selon la revendication 2, caractérisé en ce que ladite stratification de la charge est obtenue en injectant le carburant dans chacune des chambres de combustion entre 40° et 100° vilebrequin avant le Point Mort Haut combustion.

4. Procédé de commande d'un moteur à combustion interne selon l'une quelconque des revendications 1 à 3, caractérisé en ce que pendant ladite période adaptée suivant le lancement du moteur où les moyens d'injection du carburant sont commandés pour provoquer la stratification de la charge, les moyens d'allumage sont commandés en conséquence pour maintenir le rendement du moteur.

5. Procédé de commande d'un moteur à combustion interne selon la revendication 4, caractérisé en ce que pendant ladite période adaptée suivant le lancement du moteur où les moyens d'injection du carburant sont commandés pour provoquer la stratification de la charge, l'avance à l'allumage est comprise entre 40° vilebrequin avant le Point Mort Haut combustion et 10° vilebrequin avant le Point Mort Haut combustion.

6. Procédé de commande d'un moteur à combustion interne selon l'une quelconque des revendications 1 à 5, caractérisé en ce que ladite période adaptée correspond à une période de temporisation constante.

7. Procédé de commande d'un moteur à combustion interne selon l'une quelconque des revendications 1 à 5, caractérisé en ce que ladite période adaptée est de durée variable, la fin de la période étant déterminée par le dépassement de seuils par les valeurs de paramètres de fonctionnement moteur transmises par un ou plusieurs capteurs, paramètres de fonctionnement moteur dont l'évolution est en corrélation avec l'amorçage du pot catalytique.
